# EUROPEAN PATENT APPLICATION

(11) **EP 4 707 287 A1**
(43) Date of publication of application: **11.03.2026**
(21) Application number: 24800126.5
(22) Date of filing: 01.05.2024
(51) Int. Cl.: C07H 21/04

(54) **OLIGONUCLEOTIDE CONTINUOUS SYNTHESIS DEVICE AND OLIGONUCLEOTIDE SYNTHESIS METHOD USING SAME**

(30) Priority: 01.05.2023 US 202363499272 P
(71) Applicant: Natias Inc., Kobe-shi, Hyogo 650-0047 (JP)
(72) Inventor: KATAOKA, Masanori, Kobe-shi, Hyogo 650-0047 (JP); FUKUI, Chiharu, Kobe-shi, Hyogo 650-0047 (JP); MATSUMOTO, Keiichi, Kobe-shi, Hyogo 650-0047 (JP); FUJIMURA, Kazuma, Kobe-shi, Hyogo 650-0047 (JP)
(74) Representative: Elzaburu S.L.P.
(86) International application number: PCT/JP2024/016834
(87) International publication number: WO 2024/228395

(57) **Abstract**

A continuous oligonucleotide synthesizer of the present invention comprises: a raw material container that holds a protected nucleoside block as a raw material; a first reagent container that holds a first reagent to be used in chain elongation of the protected nucleoside block; a second reagent container that holds a second reagent for an oxidizing or sulfurizing reaction of a phosphate binding moiety of an elongated nucleotide resulting from the chain elongation; and a third reagent container that holds a third reagent for a deprotecting reaction of the elongated nucleotide having been oxidized or sulfurized, in which an oligonucleotide is synthesized by a flow method by continuously supplying the raw material, the first reagent and the second reagent.

## Description

### [Technical Field]

The present invention relates to a continuous oligonucleotide synthesizer using a liquid-phase flow method and a method for synthesizing an oligonucleotide using the same.

### [Background Art]

In recent years, there has been increasing attention on nucleic acid drugs that contain natural or modified oligonucleotides as the basic skeleton. In order to obtain a nucleic acid drug designed to achieve intended effects, chemical synthesis methods are widely used in the synthesis of oligonucleotides.

For the chemical synthesis of an oligonucleotide with a length of about 20- to 50-mer, a solid-phase synthesis method and a liquid-phase synthesis method are mainly employed. As a synthesizer used in the solid-phase synthesis method, such a solid-phase synthesizer as described in, for example, Patent Literature 1 is commonly used, which progresses chain extension of an oligonucleotide in a stepwise manner by repeatedly performing a treatment with a raw material and a reactant, with one end thereof fixed to a support carrier. A phosphoramidite method is mainly used in the synthesis with the solid-phase synthesizer, and porous glass (controlled pore glass: CPG) and porous polystyrene are known to be used as a support carrier for this method.

As an example of the liquid-phase synthesis method for oligonucleotides, Patent Literature 2 proposes a method for synthesizing an oligonucleotide in which a protected nucleoside obtained by introducing a hydrophilic polymer of polyethylene glycol (PEG) into the nucleobase is used as a starting material or building block to facilitate separation and purification of an intermediate product.

### [Citation List]

### [Patent Literature]

[PTL 1] Japanese Unexamined Patent Application, Publication No. H3-68593
[PTL 2] Japanese Unexamined Patent Application, Publication No. 2000-327694

### [Summary of Invention]

### [Technical Problem]

In the solid-phase synthesis method using a solid-phase synthesizer, the chain elongation of a nucleic acid oligomer can be achieved easily; however, since the reaction is conducted on a support carrier within a column that serves as a reaction vessel, it is difficult to scale up the process. In addition, in the solid-phase synthesis method, it is necessary to use a reagent excessively in each stage, and therefore, this method is cost-disadvantageous when a large amount of oligonucleotides are to be obtained. Specifically, solid-phase synthesis on a scale exceeding 1 mmol using a CGP carrier requires significant cost.

In view of the above, the liquid-phase synthesis method in which a general-purpose reactor can be used is advantageous for synthesizing large-scale nucleic acid oligomers. Even in the liquid-phase synthesis method using such a reactor, a large number of steps are required to obtain a target product for synthesis of oligonucleotides in an amount exceeding, for example, 100 g per batch.

Specifically, a liquid-phase batch synthesis method involves a chain elongation step, a deprotection step, a step of removing an excessive reagent and a byproduct and the like generated in the reaction, a purification step, a desalting step, and other steps. For large-scale synthesis, it is necessary to use reaction devices, purification devices, and others corresponding to the respective steps and the scales thereof. Due to multi-stage synthesis, impurities such as an unreacted reagent and a reaction byproduct are generated, and for removing these impurities, it is necessary to perform purification by column chromatography or the like. Therefore, process improvement and cost reduction are required for producing a large amount of oligonucleotides.

Besides, for producing a nucleic acid active pharmaceutical ingredient (API) at a GMP (Good Manufacturing Practice) grade, it is necessary to set up each of the aforementioned steps in a separate clean room. Therefore, for each equipment, not only huge management and maintenance costs but also a significant construction cost for large facilities are required, and also, a vast and clean space is required.

### [Solution to Problem]

The present invention has been made under these circumstances, and an object is to provide a continuous oligonucleotide synthesizer using a liquid-phase flow method, the synthesizer being a simpler device and enabling large-scale oligonucleotide synthesis through fewer steps, and a method for synthesizing an oligonucleotide using the same.

In order to solve the above-described problem, the continuous oligonucleotide synthesizer using a liquid-phase flow method and the method for synthesizing an oligonucleotide using the same employ the following solutions:

A first aspect of the present invention provides a continuous oligonucleotide synthesizer, comprising:
a raw material container that holds a mixture of at least two types of protected nucleoside blocks used as a raw material;
a first reagent container that holds a reagent for performing a nucleotide chain elongation reaction by mutually reacting the at least two types of protected nucleoside blocks;
a second reagent container that holds a reagent for an oxidizing or sulfurizing reaction of a phosphate binding moiety of an elongated nucleotide resulting from the chain elongation;
a third reagent container that holds a reagent for a deprotecting reaction of the elongated nucleotide having been oxidized or sulfurized;
a first joint that connects a pipe extending from the raw material container to a pipe extending from the first reagent container;
a first reaction tube that connects the first joint to a second joint connected to a pipe extending from the second reagent container; and
a second reaction tube that connects the second joint to a third joint connected to a pipe extending from the third reagent container,
wherein each of the raw material, the first reagent, the second reagent, and the third reagent is in the form of a solution,
liquid feeding devices are connected to the pipes extending from the raw material container, the first reagent container, the second reagent container, and the third reagent container, respectively, wherein the liquid feeding device feeds the solution held in the container to the reaction tube connected to the corresponding pipe,
a raw material mixture obtained by combining, in the first joint, the solution of the raw material and the solution of the first reagent is introduced to the first reaction tube,
a nucleotide chain elongation reaction is performed using the raw material mixture in the first reaction tube to introduce a solution containing a resultant chain elongated product to the second reaction tube,
the oxidizing or sulfurizing reaction of the chain elongated product is performed in the second reaction tube, and
oligonucleotide synthesis is continuously performed by continuously supplying the raw material, the first reagent, and the second reagent.

In the first aspect, the continuous oligonucleotide synthesizer may further comprise a first waste liquid container that holds a waste liquid including waste reagents generated through the nucleotide chain elongation reaction, the oxidizing or sulfurizing reaction, and the deprotecting reaction,
wherein the third joint, and a separator connected to a pipe extending from the first waste liquid container may be connected to a third reaction tube,
the deprotecting reaction may be performed in the third reaction tube to introduce a resulting product to the separator, an oligonucleotide crude product obtained through the nucleotide chain elongation reaction and the oxidizing or sulfurizing reaction may be separated by the separator from the waste reagent generated in each of the reactions, and the waste liquid including the waste reagent may be held in the first waste liquid container.

In this aspect, the continuous oligonucleotide synthesizer may further comprise:
a purification reagent container that holds a purification reagent for purifying the oligonucleotide crude product;
a target product container that holds a purified oligonucleotide as a target product; and
a second waste liquid container that holds a waste liquid including a waste reagent generated through the purification,
wherein to a pipe extending from the purification reagent container, a liquid feeding device that feeds a solution held in the purification reagent container through the pipe may be connected,
the separator, the pipe extending from the purification reagent container, and a pipe extending from the second waste liquid container may be connected to a purification tank, the oligonucleotide crude product may be purified in the purification tank, and an oligonucleotide final product obtained from a downstream side of the purification tank may be held in the target product container, thereby performing process from the nucleotide chain elongation reaction to the purification of the oligonucleotide crude product continuously by a liquid-phase flow method to continuously synthesize the oligonucleotide final product from the raw material.

In this aspect, the purification tank, and a pipe extending from the product solution container may be connected to a freeze-drying tank, the oligonucleotide product resulting from the purification may be concentrated and dried in the freeze-drying tank, and the oligonucleotide final product having been concentrated and dried may be held in the target product container.

In this aspect, a monitoring device may be disposed in at least one of a position between a downstream side of the first reaction tube and the second joint, and a position between a downstream side of the second reaction tube and the third joint.

In this aspect, a monitoring device may be disposed between a downstream side of the separator and the purification tank.

In this aspect, a monitoring device may be disposed between the purification tank and the freeze-drying tank, and a joint connected to a deviation collecting device for collecting a deviation different in length from a target oligonucleotide product may be disposed between the monitoring device and the freeze-drying tank.

In this aspect, the monitoring device may be selected from a mass spectrometer, an NMR, a UV-vis spectrophotometer, a near-infrared spectrometer, a Raman spectrometer, a conductivity meter, and a pH meter.

In this aspect, the continuous oligonucleotide synthesizer may be configured to be separable on a downstream side of the monitoring device.

In this aspect, the raw material container may hold a mixture of two types of the protected nucleoside blocks.

In this aspect, the raw material container may hold a mixture of three types of the protected nucleoside blocks.

In this aspect, the nucleotide chain elongation reaction, the oxidization or sulfurization reaction, the deprotection reaction, and the purification may be continuously performed in a liquid phase.

In this aspect, at least one of the first reaction tube and the third reaction tube may be a tube in which a catalyst to be used in the reaction is fixed.

A second aspect of the present invention provides a method for synthesizing an oligonucleotide using the continuous oligonucleotide synthesizer according to the first aspect, comprising:
a chain elongation step of performing nucleotide chain elongation by mutually reacting at least two types of protected nucleoside blocks;
an oxidization or sulfurization step of oxidizing or sulfurizing a phosphite binding moiety of an elongated nucleotide obtained in the chain elongation step;
a deprotection step of deprotecting the elongated nucleotide resulting from the oxidization or sulfurization step; and
a purification step of purifying an oligonucleotide crude product obtained in the deprotection step,
wherein the chain elongation step, the oxidization or sulfurization step, the deprotection step, and the purification step are continuously performed in a liquid phase.

In the second aspect, the number of nucleosides contained in one type of the protected nucleoside block used in the chain elongation step may be in a range of 1 to 48.

### [Advantageous Effects of Invention]

The continuous oligonucleotide synthesizer of the present invention is a simpler device and enables large-scale oligonucleotide synthesis through fewer steps.

### [Brief Description of Drawings]

[Fig. 1] Fig. 1 is a schematic diagram illustrating the configuration of a continuous oligonucleotide synthesizer according to a first embodiment.
[Fig. 2] Fig. 2 is a schematic diagram illustrating the configuration of a continuous oligonucleotide synthesizer according to a second embodiment.
[Fig. 3A] Fig. 3A is a schematic diagram illustrating the configuration of a continuous oligonucleotide synthesizer according to Modification 1 of the second embodiment.
[Fig. 3B] Fig. 3B is a schematic diagram illustrating the configuration of Separation Example 1 of the continuous oligonucleotide synthesizer.
[Fig. 3C] Fig. 3C is a schematic diagram illustrating the configuration of Separation Example 2 of the continuous oligonucleotide synthesizer.
[Fig. 4] Fig. 4 is a schematic diagram illustrating the configuration of a continuous oligonucleotide synthesizer according to Modification 2 of the second embodiment.
[Fig. 5] Fig. 5 is a diagram illustrating one specific example of the configuration of the continuous oligonucleotide synthesizer according to the second embodiment.
[Fig. 6] Fig. 6 is a diagram illustrating one specific example of a configuration involved in liquid feeding from a raw material container in the configuration of the continuous oligonucleotide synthesizer of the second embodiment.
[Fig. 7] Fig. 7 is a schematic diagram illustrating, in the configuration of the continuous oligonucleotide synthesizer of the first or second embodiment, a connecting part in a configuration in which a plurality of raw material containers are disposed, the raw material being pressure-fed with a pump.
[Fig. 8] Fig. 8 is a schematic diagram illustrating, in the configuration of the continuous oligonucleotide synthesizer of the first or second embodiment, a connecting part in a configuration in which a plurality of raw material containers are disposed, the raw material being pressure-fed with a gas.
[Fig. 9] Fig. 9 is a diagram illustrating an HPLC chart of a 24-mer crude product obtained by advancing each reaction in a reaction tube used in the continuous oligonucleotide synthesizer.
[Fig. 10] Fig. 10 is a diagram illustrating HPLC charts of fractions containing a target product obtained by ultrafiltration membrane separation of a 24-mer obtained in Example 4. The upper chart shows an HPLC chart after purification, and the lower chart shows an HPLC chart of a filtrate.
[Fig. 11] Fig. 11 is a diagram illustrating an HPLC chart of a fraction containing a target product obtained by gel filtration purification of the 24-mer obtained in Example 4.
[Fig. 12] Fig. 12 is a diagram illustrating an HPLC chart of a fraction containing a target product obtained by ODS filtration of the 24-mer obtained in Example 4.
[Fig. 13] Fig. 13 is a diagram illustrating an HPLC chart of a product obtained by ethanol precipitation performed on an ammonia-containing deprotection solution in the upper chart, and an HPLC chart of a product obtained by isopropyl alcohol (IPA) precipitation in the lower chart.

### [Description of Embodiments]

Embodiments of a continuous oligonucleotide synthesizer of the present invention will now be described referring to the accompanying drawings.

### [First Embodiment]

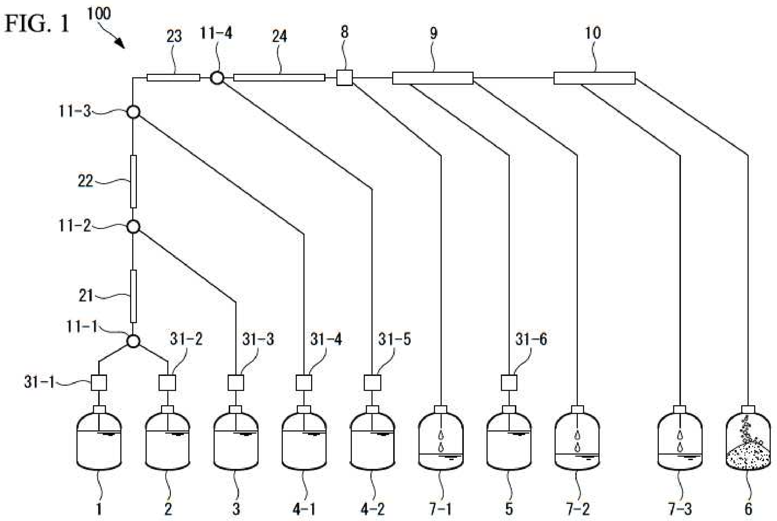

Now, a first embodiment of the present invention will be described referring to Fig. 1. Fig. 1 illustrates an example of the configuration of a continuous oligonucleotide synthesizer 100 of the present embodiment. The continuous oligonucleotide synthesizer 100 is a device that continuously produces an oligonucleotide final target product by performing various reactions starting from a raw material sequentially by a liquid-phase flow method.

The continuous oligonucleotide synthesizer 100 includes, as containers holding various reagents, a raw material container 1, a first reagent container 2, a second reagent container 3, a third reagent container 4, a purification reagent container 5, and a target product container 6. Furthermore, the synthesizer includes a first waste liquid container 7-1, a second waste liquid container 7-2, and a third waste liquid container 7-3 that hold a waste reagent, a byproduct, and a waste liquid generated in reactions described later. The example of Fig. 1 illustrates a configuration in which third reagent containers 4-1 and 4-2, respectively holding different types of reagents, are included as the third reagent container 4.

The continuous oligonucleotide synthesizer 100 of the present embodiment further includes reaction tubes 21, 22, 23, and 24, in which different reactions are respectively performed, a separator 8 that separates a waste reagent and a byproduct from a target product, a purification tank 9 for purifying the separated target product, and a freeze-drying tank 10 for freeze-drying and powdering the purified target product.

The continuous oligonucleotide synthesizer 100 of the present embodiment adopts a liquid-phase flow method in which a reagent liquid and a solution containing a reaction product are fed in a single direction from the raw material container 1 to the target product container 6, with reactions performed in a liquid phase to proceed to a next stage.

A pipe extending from the raw material container 1 and a pipe extending from the first reagent container 2 are connected at a first joint 11-1.

On the downstream side in the flow direction, the first joint 11-1 is connected, via the first reaction tube 21, to a second joint 11-2, which is connected to a pipe extending from the second reagent container 3.

On the downstream side in the flow direction, the second joint 11-2 is connected, via the second reaction tube 22, to a third joint 11-3, which is connected to a pipe extending from the third reagent container 4-1.

On the downstream side in the flow direction, the third joint 11-3 is connected, via the third reaction tube 23, to a third joint 11-4, which is connected to a pipe extending from the third reagent container 4-2.

On the downstream side in the flow direction, the third joint 11-4 is connected, via the fourth reaction tube (third reaction tube) 24, to the separator 8, which is connected to a pipe extending to the first waste liquid container 7-1.

The separator 8 is connected to the purification tank 9 on the downstream side in the flow direction. The purification tank 9 is connected to a pipe extending from the purification reagent container 5 that holds a purification reagent to be supplied to the purification tank 9, and to a pipe extending from the second waste liquid container 7-2 that holds a waste reagent and a byproduct separated in the purification tank 9.

The purification tank 9 is connected to the freeze-drying tank 10 on the downstream side in the flow direction. The freeze-drying tank 10 is connected to a pipe extending from the third waste liquid container 7-3 that holds a liquid content generated through freeze-drying, and to the target product container 6 that holds a target product obtained by freeze-drying.

A method for synthesizing an oligonucleotide using the continuous oligonucleotide synthesizer 100 of the present embodiment will now be described. Two or three types of protected nucleoside block used as the raw material are held in the raw material container 1. The protected nucleoside block used in the present embodiment will be described later.

The first reagent container 2 holds an activator for performing nucleotide chain elongation by mutually reacting the two or three types of protected nucleoside blocks with each other. An example of the activator held in the first reagent container 2 includes an activator that activates an amidite moiety by a phosphoramidite method. Representative examples of the activator include, but are not limited to, 1H-tetrazole derivatives such as 1H-tetrazole and S-ethylthio-1H-tetrazole, imidazole derivatives such as dicyanoimidazole and dichloroimidazole, and salts of sulfonic acid with azoles or tertiary amines.

The above-described activator is dissolved in a solvent to be held in the first reagent container 2 in the form of a solution. As the solvent, those commonly used in the phosphoramidite method, such as acetonitrile, dichloromethane, and THF, can be used, and a mixture of a plurality of solvents may also be used.

The second reagent container 3 holds a reagent for an oxidizing or sulfurizing reaction of a phosphite binding moiety of the elongated nucleotide obtained through the chain elongation. Examples of an oxidizing agent include, but are not limited to, a commonly used aqueous pyridine solution of iodine, a toluene solution of TBHP, a dichloromethane solution of TMSOOTMS/TMSOTf, a dichloromethane solution of 2-butanone peroxide, and an acetonitrile solution of (R)-(10-camphorsulfonyl)oxaziridine. Examples of a sulfurizing agent include, but are not limited to, a commonly used Beaucage reagent, bis(phenylacetyl) disulfide (PADS), xanthane hydride, [(N,N-dimethylaminomethylidene)amino]-3H-1,2,4-dithiazoline-3-thione (DDTT), 5-phenyl-1,2-dithiazole-3-one, bis(3-(triethoxysilyl)propyl)tetrasulfide)/N-methylimidazole, and propylene sulfide.

The third reagent container 4 holds a reagent for a deprotecting reaction of the elongated nucleotide having been oxidized or sulfurized. In the example of Fig. 1, since two types of reagents for deprotection are used, the third reagent container 4-1 and the third reagent container 4-2 are provided.

The third reagent containers 4-1 and 4-2 hold reagents for removing protecting groups from phosphate and nucleic acid base moieties. For example, a reagent for deprotecting a protecting group of a phosphate moiety can be held in one of the containers, while a reagent for deprotecting a protecting group of a nucleic acid base moiety or a hydroxyl group at the 5'- or 3'-end can be held in the other container. As the deprotecting reagent, concentrated aqueous ammonia is used, for example, when the protecting group of the phosphate moiety is a cyanoethyl group, and when the protecting group of the nucleic acid base moiety is an acyl protecting group. When the protecting group of the phosphate moiety is an allyl group, an example of the reagent includes a dialkylamide-based solvent solution containing DABCO and diisopropylamine. The dialkylamide-based solvent solution containing DABCO and diisopropylamine can be used also for removing an acyl protecting group of the nucleic acid base moiety. A nitrogen or sulfur nucleophile used for deprotection of an allyl protecting group of the phosphate moiety is selected from DABCO, trimethylamine, and a thiol derivative, an allyl scavenger is selected from diisopropylamine, diethylamine, imidazole, dodecanethiol, dithiothreitol, and a cysteine derivative, and a reaction solvent is selected from polar solvents such as acetonitrile, DMF, and DBU.

The purification reagent container 5 holds a reagent for separating and purifying the deprotected product from a byproduct, an excessive reagent, and the like generated by the two-stage deprotection reaction described above.

The byproduct and the excessive reagent generated by the two-stage deprotection reaction are separated from the target product by the separator 8 to be held in the first waste liquid container 7-1. As the separator 8 used in the present embodiment, any general-purpose device can be applied, such as a solid-liquid separator capable of separating a precipitated oily substance or solid from a liquid.

The target product container 6 is a container for collecting an oligonucleotide, that is, the target product having been generated through the purification process mentioned above.

The second waste liquid container 7-2 is a container for holding a waste reagent and an impurity separated from the target product through the purification process mentioned above. The third waste liquid container 7-3 is a container for collecting a liquid content removed when a solution containing the oligonucleotide obtained as the target product is freeze-dried to be powdered.

To the pipes extending respectively from the raw material container 1, the first reagent container 2, the second reagent container 3, the third reagent containers 4-1 and 4-2, and the purification reagent container 5, liquid feeding devices 31 (31-1 to 31-6 in Fig. 1) are connected, and each of the liquid feeding devices feeds the solution held in the container to the reaction tube connected through the pipe. As the liquid feeding devices, a plunger pump, a diaphragm pump, a syringe pump, and the like can be used.

A raw material mixture obtained by combining the raw material and the first reagent in the first joint 11-1 is introduced to the first reaction tube 21. Thereafter, in the first reaction tube 21, the raw material and the activator are mixed and contacted with each other to cause a nucleotide chain elongation reaction, and a solution containing the resultant chain elongated product is then introduced to the second reaction tube. In the second reaction tube, a reaction for oxidizing or sulfurizing the chain elongated product is performed.

In each of the first reaction tube 21, the second reaction tube 22, the third reaction tube 23, and the fourth reaction tube 24, a reaction is started inside thereof by mixing a reagent with a raw material or a reaction intermediate. After the reaction at each stage is completed, a solution resulting from the reaction is moved to a joint or separator located downstream in the flow direction, and is then used for the next reaction. Therefore, the first reaction tube 21, the second reaction tube 22, the third reaction tube 23, and the fourth reaction tube 24 each need to have a sufficient length for completing the corresponding reaction. In other words, the length of each reaction tube depends on the time required to complete the corresponding reaction, and the flow rate and flow velocity of a corresponding reagent solution.

Besides, the amount of a reaction that can be completed within each reaction tube also depends on the diameter of the reaction tube. The tube diameter can be different among the respective reaction tubes. For example, tubes having an inner dimeter of 1/8 inches, 1/4 inches, and 1/2 inches can be used.

When a tube having a diameter of 1/8 inches (an inner diameter of 2 mm) is used on the conditions that a flow rate of a solution inside the reaction tube is 1 mL/min, and that the reaction tube is operated for 24 hours, 144 g of a product is synthesized by feeding 1.44 L of the solution, and a production amount is expected to be 1 kg/7 days. When a tube having a diameter of 1/4 inches (an inner diameter of 4.15 mm) is used on the conditions that a flow rate of a solution inside the reaction tube is 10 mL/min, and that the reaction tube is operated for 24 hours, 1440 g of a product is synthesized by feeding 14.4 L of the solution, and a production amount is expected to be 1 kg/16 hours. When a tube having a diameter of 1/2 inches (an inner diameter of 8.5 mm) is used on the conditions that a flow rate of a solution inside the reaction tube is 100 mL/min, 14,400 g of a product is synthesized by feeding 144 L of the solution for 24 hours, and a production amount is expected to be 1 kg/1.6 hours.

Furthermore, in order to increase the reaction speed, a heater may be provided so that the reaction tube can be heated from the surroundings.

As a material used for the reaction tube, it is necessary to use one that does not react with the reagents passing therethrough. Examples include polyfluoroethylene, stainless steel, Teflon, polyethylene, polyvinyl chloride, and PEEK.

When a reaction tube is used for a reaction that requires a long reaction time, the total length thereof is long, and hence the tube may be twisted to be coiled.

The first reagent container 2 holds two or more types of raw materials. As one of the raw materials used in the present embodiment, a nucleotide building block (protected nucleoside block) is used. The nucleotide building block has, for example, a structure represented by the following formula (I):

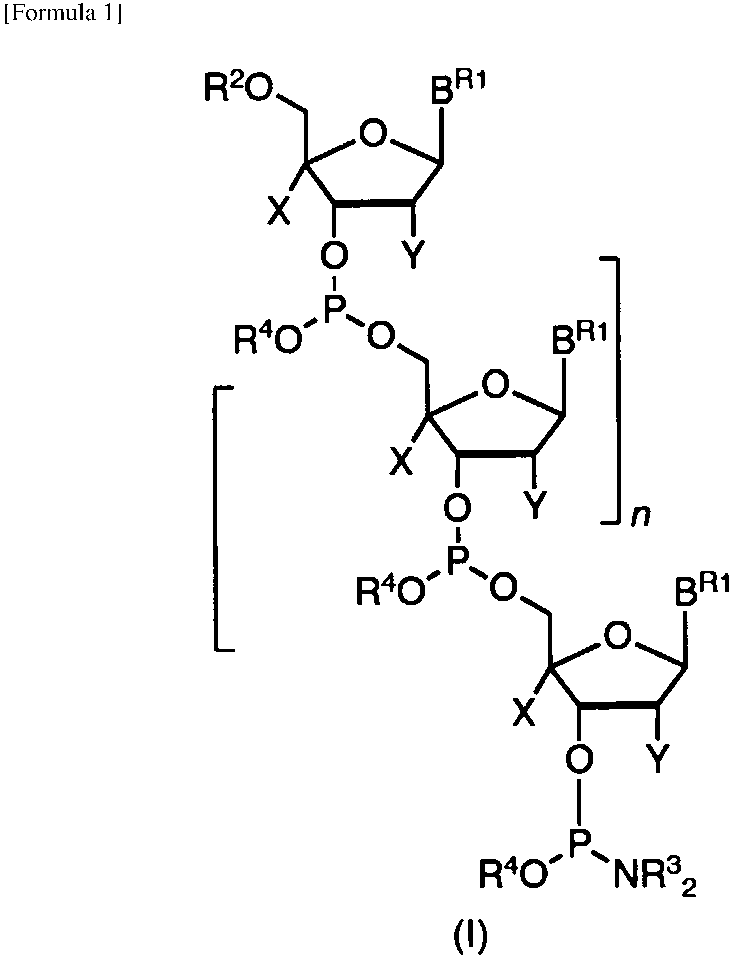

In the formula (I), B is a natural or non-natural base. R¹ and R² are independently selected from acyl protecting groups such as benzoyl, acetyl, and pivaloyl, isobutyryl, dmf, and the like. R³ is independently CH₃ or CH₂CH₃, or NR³₃ forms a ring and is either N(CH₂CH₂)₂ or N(CH₂CH₂)₂O. R⁴ is independently any one of CH₂CH₂CN, CH₂CH=CH₂, CH₂(CF₂)₆CF₃, and CH₂(CF₂)₄CF₃. X is H, and Y is any one of H, F, OCH₃, OMOE, and OTBDMS, or forms a X-Y bond, wherein X-Y may be CH₂O, CH₂CH₂O, CH₂NH, CH₂NR', or CH₂N-N=NH₂, where R' may be independently H, alkyl, carbamate, an amide group, or substituted silyl. n is an integer of 0 to 46.

In a more preferable embodiment, the lower limit of n in the formula (I) may be 5, 6, 7, 8, 9, or 10. When n is such a value, although depending on the length and amount of the other raw material to be mixed in mixing two types of raw materials, several kilograms to thousands of kilograms of GMP-grade 10-mer or more oligonucleotides can be obtained by operating the synthesizer of the present embodiment continuously for 1 week.

In a more preferable embodiment, the upper limit of n in the formula (I) may be 40, 39, 38, 37, 36, 35, or 34. When n is such a value, several kilograms to thousands of kilograms of 100-mer or more purified oligonucleotides can be obtained by operating the synthesizer of the present embodiment continuously for 1 week, though depending on the lengths and amounts of the other two types of raw materials to be mixed in mixing three types of raw materials.

As the at least one other type of raw material to be held in the first reagent container 2, a different building block having no protecting group at the 5'-terminal hydroxyl group and having a protected 3'-terminal hydroxyl group can be used. When this building block has, as a protecting group of a nucleic acid base moiety or a phosphate moiety, a protecting group of the same type as the protecting group used in the above-described nucleotide building block, a deprotecting reagent can be commonly used, which simplifies the process.

Besides, another type of building block with a different reactivity can be held in the raw material container 1. In the another type of building block used in this case, protecting groups are adjusted so as to be capable of chemo-selectively reacting with the other two types of building blocks.

As the solvent, acetonitrile, dichloromethane, THF, and the like that are commonly used in the phosphoramidite method can be used, and a mixture of a plurality of types of solvents may be used. For example, to increase the solubility of the building blocks and a product in a solution during the reaction, DMF may be mixed with any of acetonitrile, dichloromethane, and THF.

The joint used in the present embodiment may be a valve. To allow the reaction to proceed without stopping the feeding of the reagent solution for a prescribed period, the valve is kept always in an on state in the flow direction. The valve is turned on/off as needed, either based on the results of the reaction monitored as described below or for periodic inspection, cleaning, or part replacement of the synthesizer.

In order to synthesize an oligonucleotide that meets the GMP grade required for nucleic acid drugs, the continuous oligonucleotide synthesizer of the present embodiment is housed entirely within a sealable system, such as inside a clean room. Therefore, operations such as start-up of the synthesizer, monitoring and the like are performed remotely from outside the sealed system. This approach reduces the number of operators required for the synthesis and minimizes exposure time to reagents and solvents of the operators.

As described above, in the continuous oligonucleotide synthesizer of the present embodiment, an activator, an oxidizing or sulfurizing agent, a deprotecting reagent, and a purification reagent are continuously supplied to continuously perform the chain elongation in the first reaction tube, the oxidation or sulfurization in the second reaction tube, the deprotecting reaction in the third reaction tube, and the purification in the purification tank. In other words, the entire process, from the chain elongation of the raw material, through the oxidation or sulfurization and the deprotection reaction, to the separation and purification step, can be carried out continuously within the closed system by the liquid-phase flow method. Namely, the continuous oligonucleotide synthesizer of the present embodiment can continuously perform the entire oligonucleotide synthesis from a raw material by the liquid-phase flow method.

As a result, GMP-grade oligonucleotides can be synthesized with fewer steps and in a smaller space compared to conventional batch-based synthesis methods and systems. Moreover, since the number of steps can be reduced, the number of required operations to obtain the target product is also decreased, and accordingly, it is possible to achieve higher yield and purity of the target product compared to that achieved by a conventional batch synthesis method.

Besides, since the steps can be thus reduced, the amounts of waste reagents and liquids generated from the solvents and reagents used for the synthesis can be reduced. As a result, s synthesizer with a lower environmental load can be obtained.

Fig. 1 illustrates an example of a configuration in which the steps up to the freeze-drying of an oligonucleotide of a target product are performed in a single device to collect an oligonucleotide in the form of a powder.

In the configuration of Fig. 1, it is also possible to hold, in the product container, a solution of the target product obtained by the purification in the purification tank 9 without performing the freeze-drying of the target oligonucleotide. In this case, the resulting solution of the target product can be introduced outside the sealed system of the continuous oligonucleotide synthesizer, so as to be freeze-dried and powdered within a sealed system separately disposed outside. Besides, for the powdering (solidification), spray-drying or crystallization may be employed instead of the freeze-drying.

### [Second Embodiment]

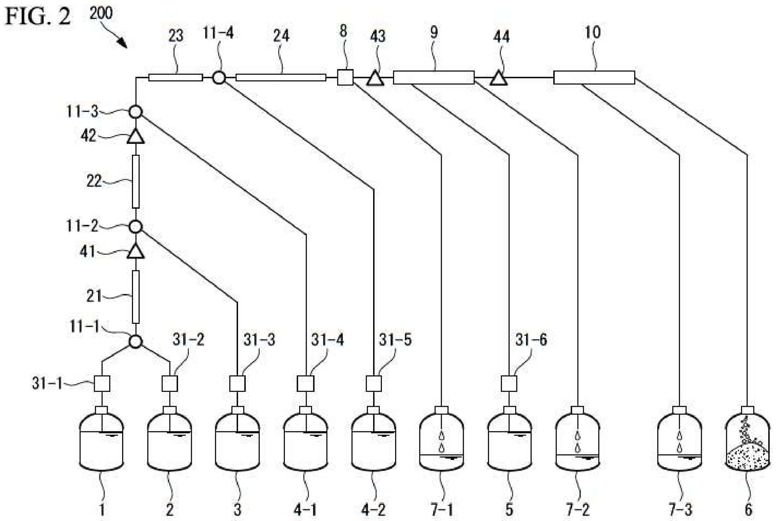

Fig. 2 illustrates a schematic configuration of a continuous oligonucleotide synthesizer 200 according to the second embodiment. In Fig. 2, components with the same reference signs as those in the first embodiment illustrated in Fig. 1 are identical to those used in the first embodiment, and their descriptions are omitted. The steps performed for obtaining a target product from a raw material are also the same as those in the first embodiment.

In the configuration of the continuous oligonucleotide synthesizer 200 of the present embodiment, monitoring devices 41, 42, 43, and 44 are disposed respectively between the downstream side of the first reaction tube 21 and the second joint 11-2, between the downstream side of the second reaction tube 22 and the third joint 11-3, between the downstream side of the separator 8 and the purification tank 9, and between the purification tank 9 and the freeze-drying tank 10. It is not necessary for all of these monitoring devices to be disposed, and a configuration in which only one, two, or three of these are disposed may be employed.

Each monitoring device can be selected from a mass spectrometer, an NMR, a UV meter, a near-infrared spectrometer, a Raman spectrometer, a conductivity meter, and the like. For example, in the configuration illustrated in Fig. 2, the monitoring device disposed between the downstream side of the first reaction tube 21 and the second joint 11-2 can be, for example, a ³¹P-NMR. For the monitoring, a part of the reaction solution may be extracted and monitored using a monitoring device provided outside the synthesizer. Alternatively, in-line monitoring may be performed, depending on the type of the monitoring device.

In the configuration illustrated in Fig. 2, for example, the monitoring device 42 disposed between the downstream side of the second reaction tube 22 and the third joint 11-3 can be a mass spectrometer. Instead of the mass spectrometer, a UV meter, a near-infrared spectrometer, a Raman spectrometer, or a conductivity meter can be disposed.

Similarly, in the exemplified configuration illustrated in Fig. 2, the monitoring device 43 disposed between the downstream side of the separator 8 and the purification tank 9, and the monitoring device 44 disposed between the purification tank 9 and the freeze-drying tank 10 may be a ³¹P-NMR, a UV meter, a near-infrared spectrometer, a Raman spectrometer, or a conductivity meter.

The positions for disposing the monitoring devices are not limited to the positions illustrated in Fig. 2, but a monitoring device can be added to a different position as needed. Furthermore, the number of monitoring devices disposed in each position is not limited to one, but a plurality of types of monitoring devices can be disposed as needed.

In the continuous oligonucleotide synthesizer of the present embodiment, a monitoring device is disposed in at least one position immediately after performing the chain elongation step, the oxidation or sulfurization step, the deprotection step, and the purification step. Thus, compared to a configuration with no monitoring device disposed, a target product with a higher purity can be obtained.

### [Modification 1 of Second Embodiment]

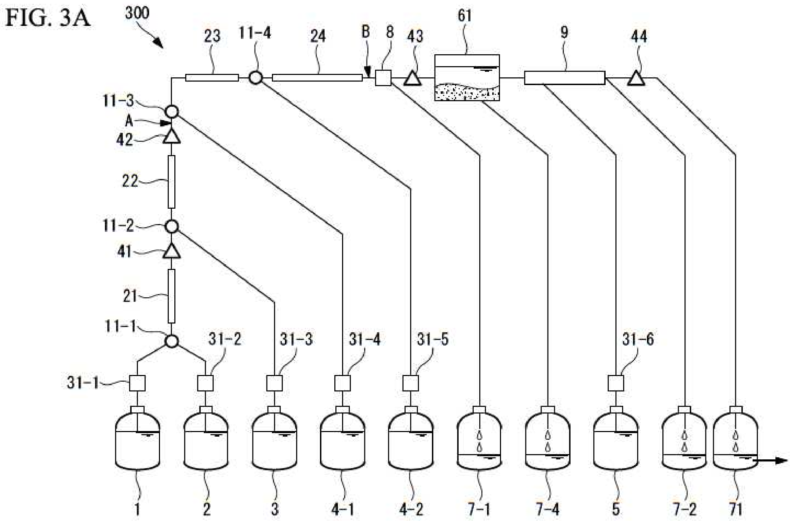

Fig. 3A illustrates a schematic configuration of a continuous oligonucleotide synthesizer according to Modification 1 of the second embodiment in which the monitoring device is disposed.

In the exemplified configuration illustrated in Fig. 3A, the continuous oligonucleotide synthesizer is configured to be separable and re-connectable in at least one of positions indicated with arrows.

Besides, in the exemplified configuration illustrated in Fig. 3A, a separation tank 61 is disposed between the downstream side of the monitoring device 43 provided on the downstream side of the separator 8 and the purification tank 9. The separation tank 61 cools the solution containing the target product obtained from the separator 8, and separates a precipitated oily substance or solid from a supernatant, and the supernatant is held in the purification tank 9, and the precipitated oily substance or solid is held in the fourth waste liquid container 7-4.

In the exemplified configuration illustrated in Fig. 3A, the freeze-drying tank 10 is not disposed on the downstream side of the monitoring device 44 disposed downstream of the purification tank 9. The solution containing the target product is held in the target product container 6 directly in the form of a solution. This target product solution is then introduced to another device or facility where the target product solution is freeze-dried. It is also possible to combine the configuration for holding the target product solution without through the freeze-drying tank 10 with the configuration of the first embodiment.

In the exemplified configuration illustrated in Fig. 3A, the monitoring device 43 is disposed on the upstream side of the separation tank 61, but it is also possible to add another monitoring device to the downstream side of the separation tank 61, or to dispose a monitoring device only on the downstream side of the separation tank 61 without disposing a monitoring device on the upstream side of the separation tank 61.

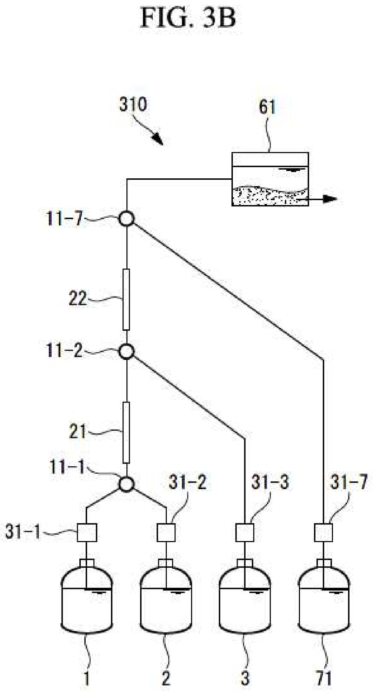

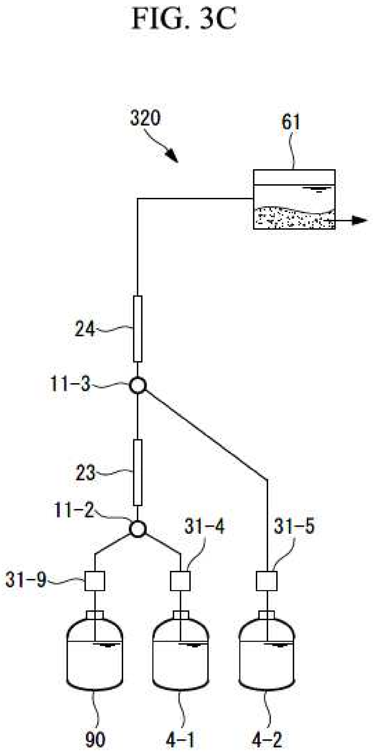

The separable configuration will be described referring to specific examples illustrated in Figs. 3B and 3C. The connection relationship among the raw material container 1, the first reagent container 2, and the second reagent container 3, as well as the configuration in which the first reaction tube 21 for the chain elongation step and the second reaction tube 22 for the oxidation or sulfurization step are provided downstream thereof as illustrated in Fig. 3B are the same as in the first and second embodiments.

In the configuration illustrated in Fig. 3B, the second reaction tube 22 is connected, by a third joint 11-7, on the downstream side to a pipe extending from a poor solvent container 71 holding a poor solvent. The downstream side of the third joint 11-7 is connected to the separation tank 61 described above.

Here, in the configuration illustrated in Fig. 3B, a protected oligonucleotide, which has been chain-elongated in the chain elongation step and has been oxidized or sulfurized in the phosphite moiety in the oxidation or sulfurization step, is introduced from the downstream of the second reaction tube 22 to the separation tank 61 via the third joint 11-3. Therefore, the oxidized or sulfurized protected oligonucleotide having been introduced to the separation tank 61 retains all protecting groups thereof, and is in the most hydrophobic state in the synthesis process of the present embodiment.

Therefore, by feeding a poor solvent such as alcohol from the poor solvent container 71 to the separation tank 61, the target product, that is, the protected oligonucleotide, precipitates within the separation tank 61 in the form of an oily substance or a solid. This precipitated oily substance or solid is the target product, and therefore is introduced to a different facility to undergo the deprotection step. In other words, in the exemplified configuration illustrated in Fig. 3A, the continuous oligonucleotide synthesizer is separated at an arrow A provided on the most upstream side, and the separation tank 61 is disposed downstream thereof.

The exemplified configuration illustrated in Fig. 3C is a configuration in which the continuous oligonucleotide synthesizer having the exemplified configuration of Fig. 3A is separated between the tip of an arrow A and the tip of an arrow B, with the separation tank 61 connected on the downstream side.

The exemplified configuration illustrated in Fig. 3C is a configuration in which the protected oligonucleotide obtained in the configuration of Fig. 3B (and held in a container 90) is reacted with two types of deprotecting reagents for sequential deprotection, and the resulting deprotected product is separated in the separation tank 61. The target product separated in the separation tank 61 is introduced to a different facility to undergo a purification step. As the separation tank, any commonly used tank can be applied, including those using solid-liquid separation, electrodialysis or the like.

Thus, by employing the configuration for the continuous oligonucleotide synthesizer of the present embodiment that allows a part thereof to be separable and re-connectable, production management can be conducted for each step. As a result, if any of the steps is defective, the defect can be easily recovered.

### [Modification 2 of Second Embodiment]

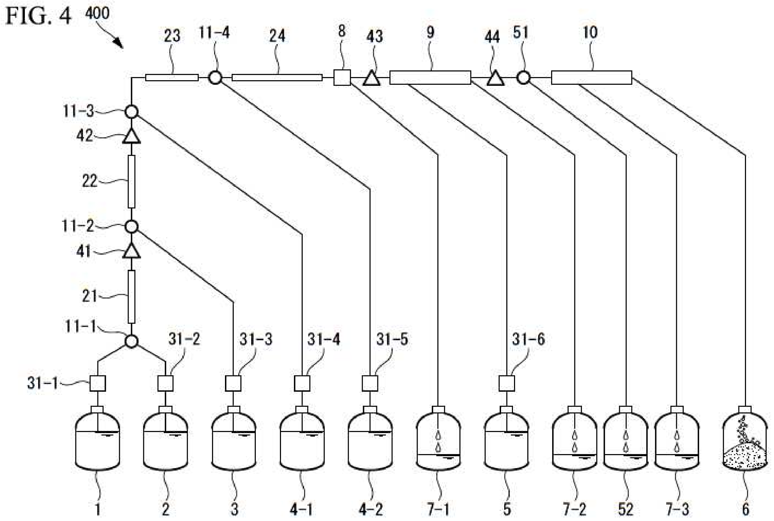

Fig. 4 illustrates an example of a configuration including a deviation container 52 for holding removed short products when products shorter than the target oligonucleotide are found to be included as a result of the monitoring.

In the configuration illustrated in Fig. 4, monitoring is performed by the monitoring device 44 disposed between the purification tank 9 and the freeze-drying tank 10. As a result of the monitoring, if a deviation having a different length from the target oligonucleotide product is found to be contained, a branching joint 51 is provided downstream of the monitoring device in the synthesis pathway for collecting that deviation in the deviation container 52.

It may be possible, in some cases, to confirm, as a result of the monitoring performed by the monitoring device, what structure a compound of the deviation has. In such a case, instead of simply discarding the deviation as a waste, a purification treatment necessary for using the deviation again as a raw material is performed.

In this manner, by allowing the continuous oligonucleotide synthesizer of the present embodiment to be equipped with a deviation device, a product that deviates from the target product can be separated from one having been produced without any problems. As a result, the purity of a crude product of the target product can be maintained, and the load on the purification step can be kept consistent. Furthermore, by separating and collecting a deviated product, an opportunity to supply it to the production process again can be created.

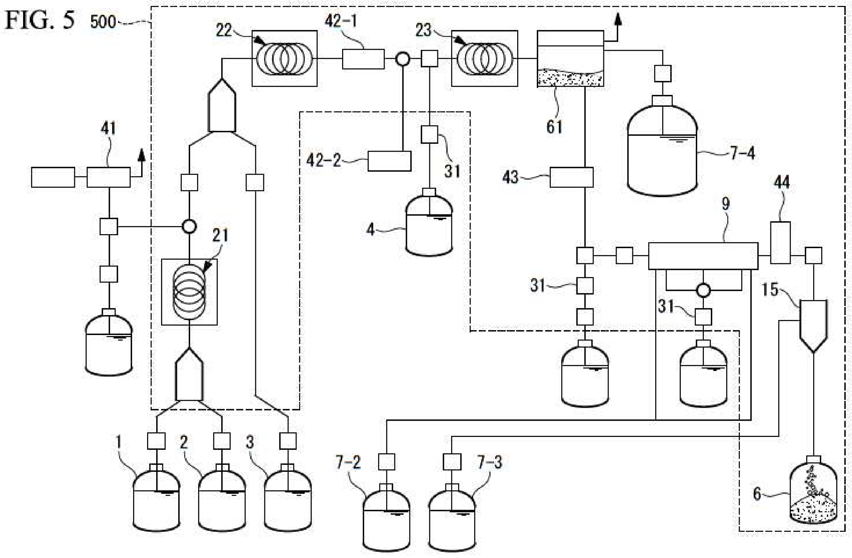

Fig. 5 is a diagram illustrating one of specific examples of the configuration of the continuous oligonucleotide synthesizer according to the second embodiment.

The specific example of Fig. 5 includes a mass spectrometer as monitoring devices 41 and 42-2, and a ³¹P-NMR as monitoring devices 42-1 and 43. Besides, all of the first reaction tube 21, the second reaction tube 22, and the third reaction tube 23 are configured as coiled tubes. These tubes are not limited to a coiled shape, but an appropriate configuration can be selected according to the size of the space for providing it or the like, for example, the tube may be folded a plurality of times and spread out in a flat shape.

Besides, in this specific example, the outside of the coiled reaction tube is covered with a heating device (an oven, for example). Thus, an appropriate temperature can be supplied in the reaction in each reaction tube, thereby keeping the reaction temperature constant.

The mass spectrometer used as the monitoring devices 41 and 42-2 uses a splitter to extract a portion of the reaction solution from the reaction pathway to monitor whether or not the desired reaction has proceeded and the target product has been obtained.

In the exemplified configuration illustrated in Fig. 5, a region surrounded by a dotted line is disposed in a space that is controlled as a sealed system. In this space of the sealed system, the final target product, the oligonucleotide, in a powder form is held in the target product container 6. The raw material container, the reagent container, and the like are disposed outside the sealed system because the size varies depending on the production scale.

For example, in the configuration illustrated in Fig. 5, the region surrounded by the dotted line can be installed in a space of approximately 1 m³, or about 0.6 m x 1.2 m x 1.8 m. The size of the continuous oligonucleotide synthesizer can be changed depending on the intended purpose, and depending on the size, and the synthesizer can be operated continuously to synthesize, for example, about 14 kg of oligonucleotides in one day, or about 100 kg of oligonucleotides over seven days.

The length and diameter of the reaction tube can be determined depending on the reaction to be performed therein. Additionally, depending on the production scale, a stirrer can be provided at the position of a joint in which two types of solutions mix.

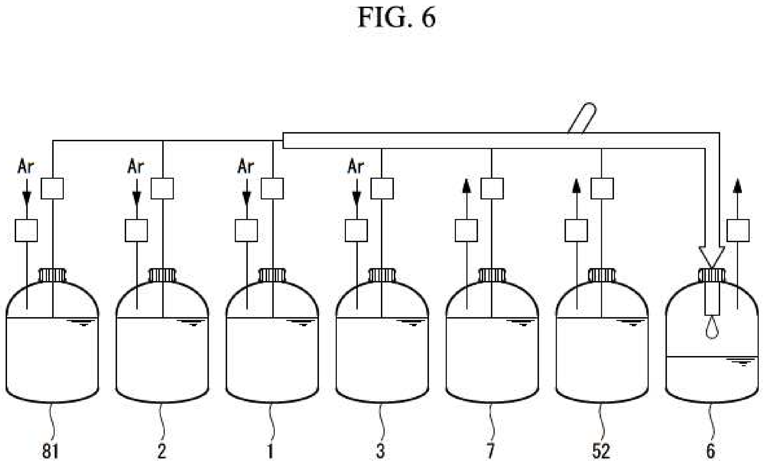

Fig. 6 is a diagram illustrating one specific example of the configuration for liquid feeding from the raw material container 1, the first reagent container 2 and the like in the configuration of the continuous oligonucleotide synthesizer according to the second embodiment.

Argon gas is blown into a washing liquid container 81, the first reagent container 2, the raw material container 1, and the second reagent container 3 to feed the solution held inside each container using the gas pressure. As the solution fed by the pressure proceeds through the synthesizer while being used in the reactions, respective corresponding liquids are sent into the waste liquid and deviation containers. An outlet is provided in each of the waste liquid container 7, the deviation container 52, and the target product container 6 to maintain a constant pressure inside the containers as well as a constant internal pressure within the reaction tubes.

For example, in the synthesizer having the configuration of Fig. 6, when the flow rate is set to 5 mL, 6 kg of oligonucleotides can be synthesized per day.

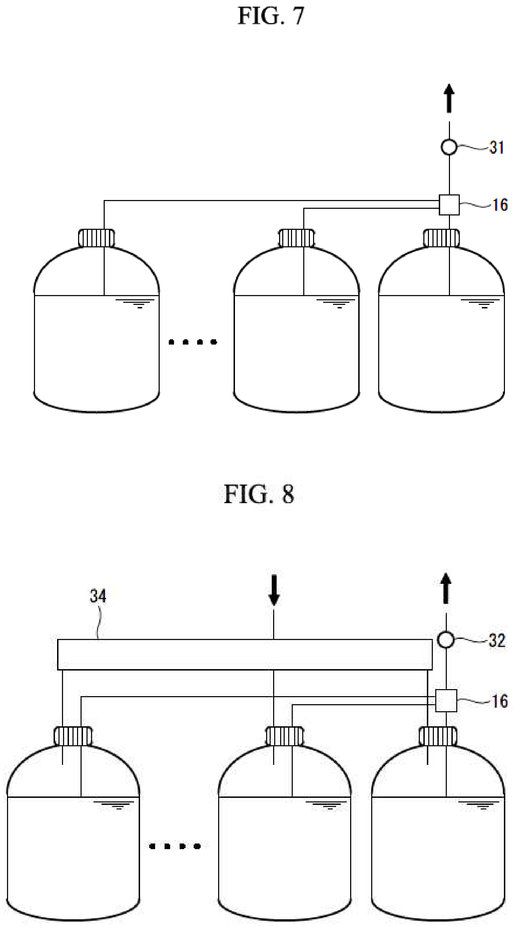

Fig. 7 is a schematic diagram of a connecting part, in the configuration of the continuous oligonucleotide synthesizer according to the first or second embodiment, in which a plurality of raw material containers are disposed, the raw material being pressure-fed with a pump. Since the continuous oligonucleotide synthesizer of the present embodiment operates continuously, the raw material and the reagent solutions are consumed continuously. Therefore, to maintain a continuous supply of the raw material and the reagent solutions, a plurality of raw material and reagent containers are disposed to be connected to one another. For example, regarding the raw material container, during the operation of the synthesizer, the remaining amount in the container is monitored, and when the amount falls below a predetermined amount, it is necessary to switch to the supply from another raw material container. Therefore, a pipe that feeds the raw material solution is equipped with a switching device for each raw material container. In the exemplified configuration illustrated in Fig. 7, a pump is used for liquid feeding. The liquid feeding with a pump is preferable for large-scale synthesis.

Fig. 8 is a schematic diagram of a connecting part, in the configuration of the continuous oligonucleotide synthesizer according to the first or second embodiment, in which a plurality of raw material containers are disposed, , the raw material being pressure-fed with a gas. In the same manner as in the configuration of Fig. 7, a plurality of containers are disposed to be connected. In the configuration of Fig. 8, the liquid feeding is performed by using gas pressure, and a gas is sent to each container via a manipulator. During the operation of the synthesizer, the remaining amount in the container is monitored, and when the amount falls below a predetermined amount, the supply is switched to the supply from another raw material container. The liquid feeding by using gas pressure is preferable for small to medium-scale synthesis.

### Examples

### [Example 1]

A test of the chain elongation step was performed using a tube as a reactor. A 20 mM dichloromethane-DMF (9:1) solution (2.6 mL) of DMTr-dTCGTCGTTTTGT 3'-phosphoramidite (12-mer A, 279 mg, 5 µmol, G having an amino group protected with an isobutyryl group, all phosphate moieties protected with allyl groups, sulfurized), and HO-dCGTTTTGTCGTT-dca (12-mer B, 233 mg, 49 µmol, G having an amino group protected with an isobutyryl group, all phosphate moieties protected with allyl groups, sulfurized), and a 55 mM dichloromethane solution (0.4 mL) of 5-ethylthio-1H-tetrazole (28 mg, 216 µmol) were fed into a tetrafluoroethylene tube having an inner diameter of 1 mm at flow rates of 5 mL/min and 0.8 mL/min, respectively, and allowed to be held therein for 30 minutes. The resultant reaction solution was taken out and subjected to HPLC analysis to confirm, by using absorption intensity at 260 nm as an index, the consumption rates of the two raw materials and the yield of a 24-mer product based on the area ratio. The experiment was conducted four times, and in all cases, the consumption rate of the 12-mer A was 99% or more, and the yield of the product, the 24-mer, was 83 to 88%.

### [Example 2]

A tube was used as a reactor to conduct a test of the sulfurization step for the 24-mer obtained in Example 1 (in which one phosphorus-containing bond moiety was a phosphite ester). A 20 mM dichloromethane-DMF (9:1) solution (2.6 mL) of the 24-mer DMTr-dTCGTCGTTTTGTpCGTTTTGTCGTT-dca (233 mg, 49 µmol), which contained a phosphite ester, and a 100 mM acetonitrile solution (0.6 mL) of a sulfurizing agent, 5-phenyl-1,2-dithiazole-3-one (12 mg, 60 µmol) were fed into a tetrafluoroethylene tube having an inner diameter of 1 mm at flow rates of 5 mL/min and 1 mL/min, respectively, and allowed to be held therein for 30 minutes. The resultant reaction solution was taken out and subjected to HPLC analysis to confirm, by using absorption intensity at 260 nm as an index, the consumption rate of the phosphite ester raw material, and the yield of the thiophosphate product DMTr-dTCGTCGTTTTGTpsCGTTTTGTCGTT-dca based on the area ratio. The experiment was conducted four times, and in all cases, the consumption rate of the phosphorus acid was 99% or more, and the yield of the sulfide product was 99% or more.

### [Example 3]

A tube was used as a reactor to conduct a test of precipitation of the sulfurized 24-mer obtained in Example 2. Ethyl acetate (3.6 mL) was added to the sulfurization reaction solution (3.6 mL) of Example 2, and the resulting precipitate was then dried to obtain the target sulfurized 24-mer. The experiment was conducted three times, and in all cases, the recovery rate was little more than 80%, and an average purity was 73%, and thus, a part of impurities originating from the reagents and the 12-mer raw material had been removed. Thus, it was confirmed that this process can be employed for semi-continuous production.

When the above precipitation was conducted three times, it was confirmed that a purity can be thus improved.

**[Table 1]**

| Number of Precipitation Operations | Recovery Rate of Sulfurized Product (%) | Purity (%) |
|---|---|---|
| 1 | 85 | 72 |
| 2 | 65 | 89 |
| 3 | 46 | 95 |

### [Example 4]

A test of the deprotection of the sulfurized 24-mer obtained in Example 3 was performed. The sulfurized 24-mer was used to examine optimization of deprotection reaction conditions for an allyl group. As a result, it was found that a system using DABCO as a deallylation agent, diisopropylamine as an allyl scavenger, and a dialkylamide solvent is the best.

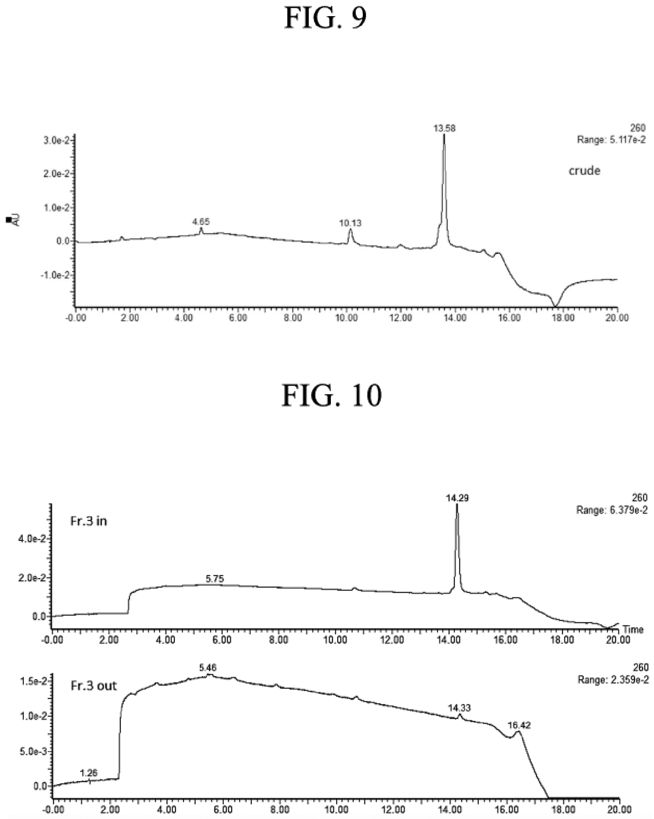

The entire amount of the sulfurized 24-mer obtained in the preceding section was dissolved in a dichloromethane solution (4 mL) of 2% dichloroacetic acid, and treated at room temperature for 30 minutes to remove a DMTr group. The reaction solution was added dropwise to a saturated sodium bicarbonate solution (20 mL), and an organic layer obtained by separation was added dropwise to ethyl acetate (20 mL) to obtain a DMTr-deprotected 24-mer in the form of a colorless powder. This product was treated with a DMF solution of 2% DABCO (w/v, 17.9 mL) at 50°C for 10 hours under the conditions of entry 4, and the resulting treated solution was then added dropwise to 170 mL of an n-hexane/ethyl acetate (3:7) solution to obtain a deallylated 24-mer in the form of a colorless powder. Subsequently, an acyl group was removed by treating the resultant with 28% aqueous ammonia (v/v, 17.9 mL) at 50°C for 10 hours. Ammonia was distilled off under reduced pressure, and a purity of a crude product of a target 24-mer, HO-dTCGTCGTTTTGTpsCGTTTTGTCGTT-OH, was confirmed by HPLC. The series of deprotection procedures were performed on 3 samples, and it was confirmed that the yield and purity were consistent (Table 2). An HPLC chart of the 24-mer crude product obtained in entry 2 was illustrated in Fig. 9. A peak at a retention time of 13.58 minutes indicates the 24-mer crude product, peaks at retention times of 10.13 and 12 minutes indicate impurities derived from the 12-mer raw material, and a peak at a retention time of 4.65 minutes indicates an impurity derived from a free protecting group.

**[Table 2]**

| Entry | Recovery Rate of Deprotected Product (%) | Purity (%) |
|---|---|---|
| 1 | >99 | 84 |
| 2 | 96 | 87 |
| 3 | >99 | 86 |

In this deprotection process, a DMTr group is changed to an acyl-based protecting group such as a benzoyl group to cancel the dichloroacetic acid treatment for removing a DMTr group in the continuous synthesizer, and the deallylation step and the deacylation step are executed as a single process under the conditions of entry 6.

### [Example 5]

A test of the purification step of the 24-mer obtained in Example 4 was performed. Through simple purification of the crude product solution, a high-purity 24-mer product could be obtained. It could be confirmed that continuous process can be performed by employing membrane separation purification in the flow synthesizer.

Ultrafiltration membrane separation: The purification was performed under the following conditions using AmiconUltra 10k (Merck).

### Ultrafiltration membrane separation (TFF method):

Separation membrane: AmiconUltra 10k (Merck)
Column capacity: 1 mL
Sample: 0.5 mg/mL, 500 µL
Diluent: 25 mM aqueous NaOH solution
Centrifugation conditions: 14000 g, 15 minutes x 3 times
Recovery rate: 75%
Purity (HPLC A260 integral value): 95.75%

An HPLC chart of the 24-mer product after the purification was illustrated in Fig. 10.

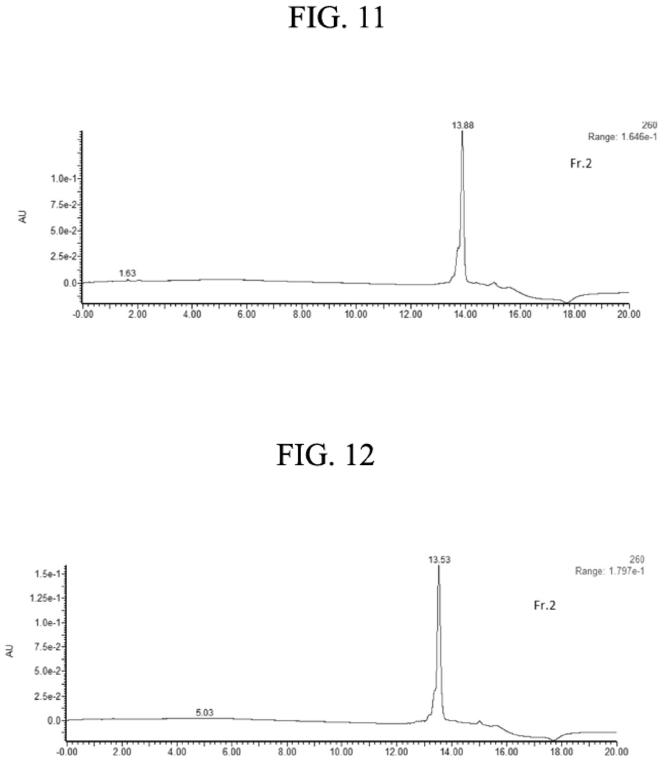

(Gel filtration purification) The purification was performed under the following conditions:
Gel: P-60 (45-90 µm)/BioRad
Column size: 1.3 cm I. D. x 11 cm
Column capacity: about 10 mL
Sample : 1 mg/mL, 300 µL, 3% of the column capacity
Equilibration eluent: 0.1 M TEAA buffer (pH 7.0)
Fraction volume: 2 mL (Fr. 1-2, 10), 1 mL (Fr. 3-9)
Flow rate: natural fall (about 0.166 mL/min)
Recovery rate: 73%
Purity (HPLC A260 integral value): 95.41%
   An HPLC chart after the purification was illustrated in Fig. 11.

(ODS Filtration) The purification was performed under the following conditions. An operation of re-filtering a fraction containing impurities was repeated three times to obtain a target product with a recovery rate of 70% and an HPLC purity (A260) of 97.4%.
Column: YAMAZEN ODS-SM 50 µm 120 Å L (1 CV = 72 mL)
Eluent A: Elix Water
   B: acetonitrile
Gradient: 13% B (0-6.20 min), 100% B (6.21-15 min)
Flow rate: 20 mL/min
Temperature: ambient
Detection: UV (254 nm)
Sample amount: about 496 mg, 20 mL total volume (1/4 CV amount)

An HPLC chart after the purification was illustrated in Fig. 12. A peak in the vicinity of a retention time of 15 minutes corresponds to a conformer of the product, and the purity includes this conformer.

(Precipitation) The product was precipitated by adding alcohol to a deprotection solution containing ammonia under the following conditions.
Sample: 16 mg/mL ammonia-treated solution

The precipitation conditions were as follows:
[Ethanol precipitation]
   24-mer solution :ethanol: 3M sodium acetate = 1:2.5:0.1
   100 µL:250 µL:10 µL
   Temperature: -20°C
   Product recovery rate: 93%
[IPA precipitation]
   24-mer solution :IPA: 3M sodium acetate = 1:1:0.1
   100 µL:100 µL:10 µL
   Temperature: -20°C
   Product recovery rate: 84%

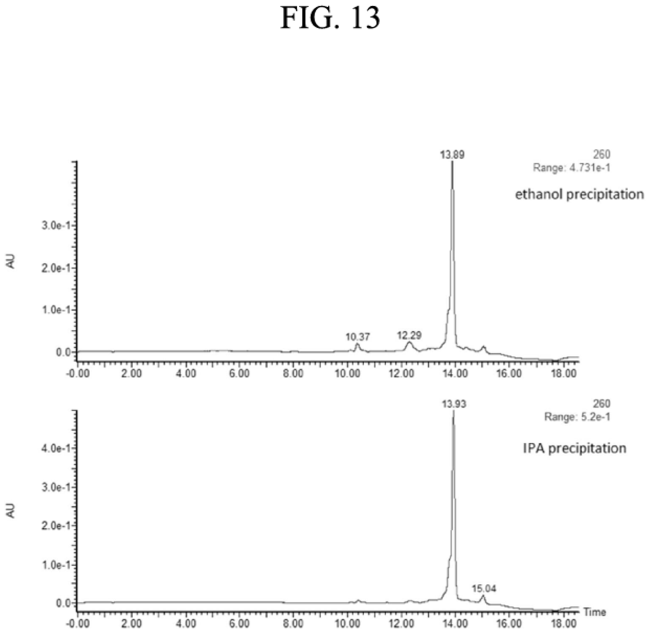

An HPLC chart of the 24-mer after the purification was illustrated in Fig. 13.

### [Reference Signs List]

1 raw material container
2 first reagent container
3 second reagent container
4 (4-1, 4-2) third reagent container
5 purification reagent container
6 target product container
7 (7-1, 7-2, 7-3, 7-4) waste liquid container
8 separator
9 purification tank
10 freeze-drying tank
11 (11-1, 11-2, 11-3, 11-4, ..., 11-7) joint
21 first reaction tube
22 second reaction tube
23 third reaction tube
24 fourth reaction tube
31 (31-1, 31-2, ..., 31-9) liquid feeding device
41, 42, 43, 44 monitoring device
51 branching joint
52 deviation container
61 separation tank
71 poor solvent container
81 washing liquid container
100, 200, 300, 310, 320, 400, 500 continuous oligonucleotide synthesizer

## Claims

1. A continuous oligonucleotide synthesizer, comprising:
a raw material container that holds a mixture of at least two types of protected nucleoside blocks used as a raw material;
a first reagent container that holds a first reagent for performing nucleotide chain elongation by mutually reacting the at least two types of protected nucleoside blocks;
a second reagent container that holds a second reagent for an oxidizing or sulfurizing reaction of a phosphite binding moiety of an elongated nucleotide resulting from the chain elongation;
a third reagent container that holds a third reagent for a deprotecting reaction of the elongated nucleotide having been oxidized or sulfurized;
a first joint that connects a pipe extending from the raw material container to a pipe extending from the first reagent container;
a first reaction tube that connects the first joint to a second joint connected to a pipe extending from the second reagent container; and
a second reaction tube that connects the second joint to a third joint connected to a pipe extending from the third reagent container,
wherein each of the raw material, the first reagent, the second reagent, and the third reagent is in the form of a solution,
liquid feeding devices are connected the pipes extending from the raw material container, the first reagent container, the second reagent container, and the third reagent container, respectively, wherein the liquid feeding device feeds the solution held in the container to the reaction tube connected to the corresponding pipe,
a raw material mixture obtained by combining, in the first joint, the solution of the raw material and the solution of the first reagent is introduced to the first reaction tube,
a nucleotide chain elongation reaction is performed using the raw material mixture in the first reaction tube to introduce a solution containing a resultant chain elongated product to the second reaction tube,
the oxidizing or sulfurizing reaction of the chain elongated product is performed in the second reaction tube, and
oligonucleotide synthesis is continuously performed by continuously supplying the raw material, the first reagent, and the second reagent.

2. The continuous oligonucleotide synthesizer according to claim 1, further comprising a first waste liquid container that holds a waste liquid including waste reagents generated through the nucleotide chain elongation reaction, the oxidizing or sulfurizing reaction, and the deprotecting reaction,
wherein the third joint, and a separator connected to a pipe extending from the first waste liquid container are connected to a third reaction tube,
the deprotecting reaction is performed in the third reaction tube to introduce a resulting product to the separator, an oligonucleotide crude product obtained through the nucleotide chain elongation reaction and the oxidizing or sulfurizing reaction is separated by the separator from the waste reagent generated in each of the reactions, and the waste liquid including the waste reagent is held in the first waste liquid container.

3. The continuous oligonucleotide synthesizer according to claim 2, further comprising:
a purification reagent container that holds a purification reagent for purifying the oligonucleotide crude product;
a target product container that holds a purified oligonucleotide as a target product; and
a second waste liquid container that holds a waste liquid including a waste reagent generated through the purification,
wherein to a pipe extending from the purification reagent container, a liquid feeding device that feeds a solution held in the purification reagent container through the pipe is connected,
the separator, the pipe extending from the purification reagent container, and a pipe extending from the second waste liquid container are connected to a purification tank, the oligonucleotide crude product is purified in the purification tank, and an oligonucleotide final product obtained from a downstream side of the purification tank is held in the target product container, thereby performing process from the nucleotide chain elongation reaction to the purification of the oligonucleotide crude product continuously in a liquid phase to continuously synthesize the oligonucleotide final product from the raw material.

4. The continuous oligonucleotide synthesizer according to claim 3, wherein the purification tank, and a pipe extending from the target product container are connected to a freeze-drying tank, the purified oligonucleotide is concentrated, dried, and powdered in the freeze-drying tank, and the powdered oligonucleotide is held in the target product container.

5. The continuous oligonucleotide synthesizer according to claim 1, wherein a monitoring device is disposed in at least one of a position between a downstream side of the first reaction tube and the second joint, and a position between a downstream side of the second reaction tube and the third joint.

6. The continuous oligonucleotide synthesizer according to claim 3, wherein a monitoring device is disposed between a downstream side of the separator and the purification tank.

7. The continuous oligonucleotide synthesizer according to claim 4, wherein a monitoring device is disposed between the purification tank and the freeze-drying tank, and a joint connected to a deviation collecting device for collecting a deviation different in length from a target oligonucleotide product is disposed between the monitoring device and the freeze-drying tank.

8. The continuous oligonucleotide synthesizer according to any one of claims 5 to 7, wherein the monitoring device is selected from a mass spectrometer, an NMR, a UV-vis spectrophotometer, a near-infrared spectrometer, a Raman spectrometer, a conductivity meter, and a pH meter.

9. The continuous oligonucleotide synthesizer according to any one of claims 5 to 7, which is configured to be separable on a downstream side of the monitoring device.

10. The continuous oligonucleotide synthesizer according to claim 1, wherein the raw material container holds a mixture of two types of the protected nucleoside blocks.

11. The continuous oligonucleotide synthesizer according to claim 1, wherein the raw material container holds a mixture of three types of the protected nucleoside blocks.

12. The continuous oligonucleotide synthesizer according to claim 3, wherein the nucleotide chain elongation reaction, the oxidizing or sulfurizing reaction, the deprotecting reaction, and the purification are continuously performed in a liquid phase.

13. The continuous oligonucleotide synthesizer according to claim 2, wherein at least one of the first reaction tube and the third reaction tube is a tube in which a catalyst to be used in the reaction is fixed.

14. A method for synthesizing an oligonucleotide using the continuous oligonucleotide synthesizer according to claim 3, comprising:
a chain elongation step of performing nucleotide chain elongation by mutually reacting at least two types of protected nucleoside blocks;
an oxidization or sulfurization step of oxidizing or sulfurizing a phosphite binding moiety of an elongated nucleotide obtained in the chain elongation step;
a deprotection step of deprotecting the elongated nucleotide resulting from the oxidization or sulfurization step; and
a purification step of purifying an oligonucleotide crude product obtained in the deprotection step,
wherein the chain elongation step, the oxidization or sulfurization step, the deprotection step, and the purification step are continuously performed in a liquid phase.

15. The method for synthesizing an oligonucleotide according to claim 14, wherein the number of nucleosides contained in one type of the protected nucleoside block used in the chain elongation step is in a range of 1 to 48.

16. The method for synthesizing an oligonucleotide according to claim 14, wherein an oligonucleotide having a desired chain length is obtained by condensing two types of the protected nucleoside blocks.

17. The method for synthesizing an oligonucleotide according to claim 14, wherein the oligonucleotide of a target product is simply purified by precipitation or oiling out.

18. The method for synthesizing an oligonucleotide according to claim 14, wherein an allyl protecting group of a phosphate moiety is deprotected with a nitrogen or sulfur nucleophile, the nitrogen or sulfur nucleophile is selected from DABCO, trimethylamine, and a thiol derivative, an allyl scavenger is selected from diisopropylamine, diethylamine, imidazole, dodecanethiol, dithiothreitol, and a cysteine derivative, and a reaction solvent is selected from acetonitrile, DMF, and DBU.

19. The method for synthesizing an oligonucleotide according to claim 14, wherein an oligonucleotide final product is obtained from a deprotection solution by precipitation.

20. The method for synthesizing an oligonucleotide according to claim 14, wherein an oligonucleotide final product is obtained from a deprotection solution by precipitation, and then filtration or membrane separation.
